# EUROPÄISCHE PATENTSCHRIFT

(11) **EP 2 714 481 B1**
(45) Veröffentlichungstag und Bekanntmachung des Hinweises auf die Patenterteilung: **27.04.2016**
(21) Anmeldenummer: 12720880.9
(22) Anmeldetag: 14.05.2012
(51) Int. Cl.: B60T 13/46, F04C 28/00

(54) **STEUERVORRICHTUNG FÜR EINE ELEKTRISCHE VAKUUMPUMPE UND VERFAHREN ZUM ANSTEUERN EINER ELEKTRISCHEN VAKUUMPUMPE**
CONTROL DEVICE FOR AN ELECTRIC VACUUM PUMP, AND METHOD FOR ACTUATING AN ELECTRIC VACUUM PUMP
DISPOSITIF DE COMMANDE POUR UNE POMPE À VIDE ÉLECTRIQUE ET PROCÉDÉ D'EXCITATION D'UNE POMPE À VIDE ÉLECTRIQUE

(30) Priorität: 31.05.2011 DE 102011076785
(43) Veröffentlichungstag der Anmeldung: 09.04.2014
(73) Patentinhaber: Robert Bosch GmbH, 70442 Stuttgart (DE)
(72) Erfinder: BRUEX, Thomas, 71720 Oberstenfeld (DE)
(86) Internationale Anmeldenummer: PCT/EP2012/058929
(87) Internationale Veröffentlichungsnummer: WO 2012/163662

(56) Entgegenhaltungen:
- US-A1- 2003 006 891
- US-A1- 2006 158 028

## Beschreibung

Die Erfindung betrifft eine Steuervorrichtung für eine elektrische Vakuumpumpe und ein Verfahren zum Ansteuern einer elektrischen Vakuumpumpe, insbesondere in Kraftfahrzeugen mit Bremskraftverstärker.

### Stand der Technik

Elektrische Vakuumpumpen werden in Kraftfahrzeugen zur Erzeugung von Unterdruck in der Vakuumkammer eines Bremskraftverstärkers eingesetzt. Dabei kann die elektrische Vakuumpumpe als alleinige Vakuumquelle oder zusätzlich zu einer weiteren Vakuumquelle, wie beispielsweise einem Verbrennungsmotor oder einer mechanischen Vakuumpumpe, eingesetzt werden.

Üblicherweise erfolgt die Ansteuerung der elektrischen Vakuumpumpe mit dem in der Vakuumkammer des Bremskraftverstärkers gemessenen Unterdruck bzw. der Druckdifferenz im Bremskraftverstärker als Regelgröße. Wenn der Differenzdruck einen vordefinierten unteren Schwellwert unterschreitet, das heißt, wenn der Unterdruck in der Vakuumkammer des Bremskraftverstärkers zu gering wird, wird die elektrische Vakuumpumpe angeschaltet, um wieder einen höheren Differenzdruck aufzubauen. Bei Überschreiten eines vordefinierten oberen Schwellwertes, das heißt, wenn der Unterdruck in der Vakuumkammer des Bremskraftverstärkers wieder eine zum ordnungsgemäßen Betrieb des Bremskraftverstärkers hinreichende Größe angenommen hat, wird die elektrische Vakuumpumpe wieder abgeschaltet.

Elektrische Vakuumpumpen sind bezüglich ihrer thermischen Belastbarkeit unterschiedlich ausgelegt. Beim Betrieb der elektrischen Vakuumpumpen steigt ihre Betriebstemperatur mit der Laufzeit. Überschreitet die Betriebstemperatur einer elektrischen Vakuumpumpe eine vorbestimmte kritische Temperatur, kann es zu thermischer Überlastung und damit zu Defekten der elektrischen Vakuumpumpe kommen. Daher können elektrische Vakuumpumpen üblicherweise nicht kontinuierlich in Betrieb sein und müssen ein vorbestimmtes Verhältnis von Betriebszeit und Nicht-Betriebszeit einhalten.

Die Druckschrift US 2006/0158028 A1 beschreibt ein Verfahren zum Ansteuern einer elektrischen Vakuumpumpe eines Bremskraftverstärkers. Zur Schonung der elektrischen Vakuumpumpe wird eine Mindestgeschwindigkeit des Fahrzeugs bestimmt, unterhalb derer ein Anschalten der elektrischen Vakuumpumpe verhindert wird.

### Offenbarung der Erfindung

Die Erfindung beruht auf der Idee, die Ansteuerung einer elektrischen Vakuumpumpe so auszulegen, dass die kritische Temperatur der elektrischen Vakuumpumpe nicht oder nur selten erreicht wird, so dass es nicht zu einem zwangsweisen Abschalten der elektrischen Vakuumpumpe in kritischen Fahrsituationen kommt. Je höher die kumulierte Betriebsdauer der elektrischen Vakuumpumpe in einer vorangegangen vorbestimmten Zeitspanne ist, desto geringer wird der obere Sollwert der Regelgröße eingestellt, um einer hohen Beanspruchung der elektrischen Vakuumpumpe in einem kurzen Zeitraum vorzubeugen. Die Ansteuerung der elektrischen Vakuumpumpe erfolgt daher in adaptiver Weise und kann dynamisch die temporäre kumulierte Betriebsdauer der elektrischen Vakuumpumpe in einem unkritischen Bereich regulieren.

Die vorliegende Erfindung schafft daher gemäß einer Ausführungsform eine Steuervorrichtung für eine elektrische Vakuumpumpe, mit einer Bestimmungseinrichtung, welche dazu ausgelegt ist, einen Betriebsparameter der elektrischen Vakuumpumpe, der von einer Betriebsdauer oder einer Temperatur der elektrischen Vakuumpumpe abhängig ist, und eine Regelgröße für die elektrische Vakuumpumpe zu erfassen, einer Schalteinrichtung, welche dazu ausgelegt ist, die elektrische Vakuumpumpe in Abhängigkeit von einem Vergleich der Regelgröße mit mindestens einem Sollwert anzuschalten oder abzuschalten, und einer Regeleinrichtung, welche dazu ausgelegt ist, den mindestens einen Sollwert der Regelgröße in Abhängigkeit von dem Betriebsparameter zu verändern.

Die vorliegende Erfindung schafft gemäß einer Ausführungsform weiterhin ein System mit einer elektrischen Vakuumpumpe, welche dazu ausgelegt ist, einen Unterdruck für einen Bremskraftverstärker in einem Kraftfahrzeug zu erzeugen, und einer erfindungsgemäßen Steuervorrichtung, welche dazu ausgelegt ist, die elektrische Vakuumpumpe anzusteuern. Die vorliegende Erfindung schafft zudem gemäß einer Ausführungsform ein Verfahren zum Ansteuern einer elektrischen Vakuumpumpe, mit den Schritten des Erfassens eines Betriebsparameters der elektrischen Vakuumpumpe, der von einer Betriebsdauer oder einer Temperatur der elektrischen Vakuumpumpe abhängig ist, des Erfassens einer Regelgröße für die elektrische Vakuumpumpe, des Veränderns mindestens eines Sollwerts der Regelgröße in Abhängigkeit von dem Betriebsparameter, des Vergleichens der Regelgröße mit dem mindestens einen Sollwert zum Erzeugen eines Regelsignals, und des Änderns des Betriebszustands der elektrischen Vakuumpumpe in Abhängigkeit von dem Regelsignal.

### Vorteile der Erfindung

In einer vorteilhaften Ausführungsform kann die Steuervorrichtung einen Laufzeitzähler, welcher dazu ausgelegt ist, den Betriebsparameter, der von der prozentualen Gesamtbetriebsdauer der elektrischen Vakuumpumpe abhängt, zu ermitteln und der Bestimmungseinrichtung bereitzustellen, umfassen. Dadurch kann die relative Betriebsdauer der elektrischen Vakuumpumpe bestimmt werden.

Vorzugsweise kann der Laufzeitzähler dazu ausgelegt sein, den Betriebsparameter in gleichmäßigen Zeitabständen zu inkrementieren, während die Schalteinrichtung die elektrische Vakuumpumpe in angeschaltetem Zustand hält, und den Betriebsparameter in gleichmäßigen Zeitabständen zu dekrementieren, während die Schalteinrichtung die elektrische Vakuumpumpe in abgeschaltetem Zustand hält. Dadurch kann die Betriebsdauer der elektrischen Vakuumpumpe in einfacher Weise als kumulierter Wert erhalten werden.

Vorteilhafterweise kann die Regelgröße ein von der elektrischen Vakuumpumpe erzeugter Unterdruck sein, wobei der mindestens eine Sollwert einen oberen Schwellwert umfasst, und wobei die Schalteinrichtung dazu ausgelegt ist, die elektrische Vakuumpumpe abzuschalten, wenn der Unterdruck den oberen Schwellwert überschreitet. Auf diese Weise kann eine temporäre frühzeitige Abschaltung der elektrischen Vakuumpumpe erfolgen, wenn eine Überlastung der elektrischen Vakuumpumpe droht. Dies verringert insbesondere die Wahrscheinlichkeit, dass die elektrische Vakuumpumpe im realen Fahrbetrieb eines Kraftfahrzeugs zwangsweise abgeschaltet werden muss.

In einer bevorzugten Ausführungsform des erfindungsgemäßen Verfahrens kann der mindestens eine Sollwert um einen vorbestimmten Betrag gesenkt werden, wenn der Betriebsparameter einen Parameterschwellwert überschreitet. Dadurch kann eine einfache Sollwertanpassung in einer oder mehreren diskreten Sollwertstufen erfolgen.

In einer alternativen Ausführungsform kann der mindestens eine Sollwert kontinuierlich mit einer Zunahme des Betriebsparameters gesenkt werden. Dadurch kommt es zu einer gleichmäßigen Verringerung der Ausschaltschwelle und zu einer fein justierbaren Schwellwertanpassung.

In einer vorteilhaften Ausführungsform des erfindungsgemäßen Verfahrens kann das Erfassen des Betriebsparameters ein Erfassen der Betriebstemperatur der elektrischen Vakuumpumpe umfassen. Dies hat den Vorteil, dass ein Temperaturmodell eingesetzt werden kann, welches die Abhängigkeit der Betriebstemperatur der elektrischen Vakuumpumpe von der Betriebsdauer angibt.

Bevorzugte Weiterbildungen sind Gegenstand der jeweiligen Unteransprüche.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

### Kurze Beschreibung der Zeichnungen

Weitere Merkmale und Vorteile von Ausführungsformen der Erfindung ergeben sich aus der nachfolgenden Beschreibung mit Bezug auf die beigefügten Zeichnungen.

Es zeigen:
- Fig. 1: eine schematische Darstellung eines Systems mit einer elektrischen Vakuumpumpe in einem Kraftfahrzeug gemäß einer Ausführungsform der Erfindung;
- Fig. 2: eine schematische Darstellung eines Verfahrens zum Ansteuern einer elektrischen Vakuumpumpe gemäß einer weiteren Ausführungsform der Erfindung;
- Fig. 3a: eine schematische Darstellung eines Kennliniendiagramms für die Ansteuerung einer elektrischen Vakuumpumpe gemäß einer weiteren Ausführungsform der Erfindung;
- Fig. 3b: eine schematische Darstellung eines Kennliniendiagramms für die Ansteuerung einer elektrischen Vakuumpumpe gemäß einer weiteren Ausführungsform der Erfindung; und
- Fig. 4: Diagramme des zeitlichen Verlaufs eines Differenzdrucks und einer Betriebsdauer einer elektrischen Vakuumpumpe bei einer Ansteuerung der elektrischen Vakuumpumpe gemäß einer weiteren Ausführungsform der Erfindung.

In den Figuren der Zeichnung sind gleiche und funktionsgleiche Elemente, Merkmale und Komponenten - sofern nichts Anderes ausgeführt ist - jeweils mit denselben Bezugszeichen versehen. Es versteht sich, dass Komponenten und Elemente in den Zeichnungen aus Gründen der Übersichtlichkeit und Verständlichkeit nicht notwendigerweise maßstabsgetreu zueinander wiedergegeben sind.

### Ausführliche Beschreibung der Erfindung

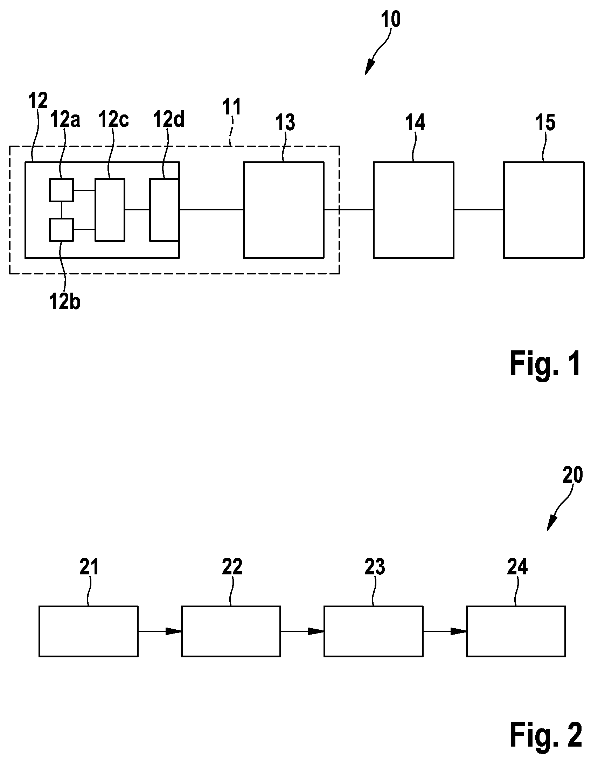

Fig. 1 zeigt eine schematische Darstellung eines Systems 10 mit einer elektrischen Vakuumpumpe 13 in einem Kraftfahrzeug. Das System 10 umfasst eine Steuervorrichtung 12, eine elektrische Vakuumpumpe 13, die von der Steuervorrichtung 12 angesteuert wird, einen Bremskraftverstärker 14 sowie optional eine weitere Vakuumquelle 15. Die weitere Vakuumquelle 15 kann beispielsweise ein Verbrennungsmotor des Kraftfahrzeugs oder eine mechanische Vakuumpumpe sein. Die elektrische Vakuumpumpe 13 sowie gegebenenfalls die weitere Vakuumquelle 15 sind dazu ausgelegt, einen Unterdruck in einer Vakuumkammer des Bremskraftverstärkers 14 zu erzeugen.

Die Steuervorrichtung 12 und die elektrische Vakuumpumpe 13 können dabei in einer gemeinsamen Systemeinrichtung 11 umfasst sein. Es kann auch möglich sein, dass die Steuervorrichtung 12 in der Elektronik der elektrischen Vakuumpumpe 13 integriert ist. Alternativ kann die Steuervorrichtung 12 in einem Motorsteuergerät oder einem sonstigen Steuergerät eines Kraftfahrzeugs implementiert sein. Die Steuervorrichtung 12 umfasst eine Bestimmungseinrichtung 12a, eine Schalteinrichtung 12d und eine Regeleinrichtung 12c. Weiterhin kann die Steuervorrichtung 12 einen Laufzeitzähler 12b umfassen.

Die Schalteinrichtung 12d ist dazu ausgelegt, die elektrische Vakuumpumpe 13 in Abhängigkeit von einem Vergleich einer Regelgröße mit einem oder mehreren Sollwerten anzuschalten oder abzuschalten. Beispielsweise kann die Schalteinrichtung 12d die elektrische Vakuumpumpe 13 anschalten, wenn ein Unterdruck bzw. eine Druckdifferenz in der Vakuumkammer des Bremskraftverstärkers 14 unter einen unteren Schwellwert sinkt. In diesem Fall wird die elektrische Vakuumpumpe 13 in einem aktiven Betriebszustand versetzt, um den Unterdruck des Bremskraftverstärkers 14 zu erhöhen. Wenn der von der elektrischen Vakuumpumpe 13 erzeugte Unterdruck bzw. die Druckdifferenz groß genug ist, das heißt, wenn der Unterdruck einen oberen Schwellwert überschreitet, kann die Schalteinrichtung 12d die elektrische Vakuumpumpe 13 wieder abschalten. Die Sollwerte können dabei den unteren Schwellwert und den oberen Schwellwert umfassen.

Die Bestimmungseinrichtung 12a ist dazu ausgelegt, die Regelgröße der elektrischen Vakuumpumpe 13, beispielsweise einen Unterdruck bzw. eine Druckdifferenz in der Vakuumkammer des Bremskraftverstärkers 14, zu erfassen.

Die Bestimmungseinrichtung 12a ist weiterhin dazu ausgelegt, einen Betriebsparameter der elektrischen Vakuumpumpe 13, der von einer Betriebsdauer oder einer Temperatur der elektrischen Vakuumpumpe 13 abhängig ist, zu erfassen. Der Betriebsparameter kann beispielsweise ein Zählerwert des Laufzeitzählers 12b sein. Der Zählerwert des Laufzeitzählers 12b kann dazu in gleichmäßigen Zeitabständen inkrementiert werden, während die Schalteinrichtung 12d die elektrische Vakuumpumpe 13 in angeschaltetem Zustand hält. Gleichermaßen kann der Zählerwert des Laufzeitzählers 12b in gleichmäßigen Zeitabständen dekrementiert werden, während die Schalteinrichtung 12d die elektrische Vakuumpumpe 13 in abgeschaltetem Zustand hält. Auf diese Weise kann der Betriebsparameter ein Maß für die kumulierte Betriebsdauer der elektrischen Vakuumpumpe 13 darstellen. Insbesondere kann der Betriebsparameter einen prozentualen Wert angeben, während der die elektrische Vakuumpumpe 13 über eine vorbestimmte Zeitspanne in der Vergangenheit in einem aktiven Betriebszustand war. Mit anderen Worten kann der Betriebsparameter Aufschluss darüber geben, wie hoch die Beanspruchung der elektrischen Vakuumpumpe 13 ist. Je höher der Betriebsparameter ist, desto länger ist die kumulierte Betriebszeit der elektrischen Vakuumpumpe 13.

Es ist alternativ auch möglich, dass der Betriebsparameter ein Wert ist, der die Betriebstemperatur der elektrischen Vakuumpumpe 13 angibt. Beispielsweise kann der Betriebsparameter über ein Temperaturmodell der elektrischen Vakuumpumpe 13 geschätzt werden. Insbesondere in Fällen, in denen beispielsweise nach einem Einschalten des gesamten Systems der Laufzeitzähler 12b noch einen sehr geringen Wert aufweist, die Betriebstemperatur aufgrund externer Einflüsse aber bereits einen hohen Anfangswert aufweist, kann es vorteilhaft sein, auf die Betriebstemperatur als Betriebsparameter statt auf den Laufzeitzählerstand zurückzugreifen.

Die Regeleinrichtung 12c ist dazu ausgelegt, den oder die Sollwert(e) der Regelgröße in Abhängigkeit von dem Betriebsparameter zu verändern. Beispielsweise kann die Regeleinrichtung 12c den oberen Schwellwert für den Unterdruck heben oder senken, je nachdem, wie hoch die kumulierte Betriebsdauer der elektrischen Vakuumpumpe 13 zum momentanen Zeitpunkt gerade ist. Die Regeleinreichtung 12c kann gleichermaßen auch den unteren Schwellwert für den Unterdruck heben oder senken, je nachdem, wie hoch die kumulierte Betriebsdauer der elektrischen Vakuumpumpe 13 zum momentanen Zeitpunkt gerade ist.

Fig. 2 zeigt eine schematische Darstellung eines Verfahrens 20 zum Ansteuern einer elektrischen Vakuumpumpe, insbesondere der elektrischen Vakuumpumpe 13 in Fig. 1. Das Verfahren 20 kann dabei beispielsweise von der Steuervorrichtung 12 in Fig. 1 durchgeführt werden.

In einem ersten Schritt 21 erfolgt ein Erfassen eines Betriebsparameters der elektrischen Vakuumpumpe, der von einer Betriebsdauer der elektrischen Vakuumpumpe abhängig ist, und ein Erfassen einer Regelgröße für die elektrische Vakuumpumpe. In einem zweiten Schritt 22 erfolgt ein Verändern mindestens eines Sollwerts der Regelgröße in Abhängigkeit von dem Betriebsparameter. In einem dritten Schritt 23 erfolgt ein Vergleichen der Regelgröße mit dem mindestens einen Sollwert zum Erzeugen eines Regelsignals. In einem vierten Schritt 24 erfolgt ein Ändern des Betriebszustands der elektrischen Vakuumpumpe in Abhängigkeit von dem Regelsignal.

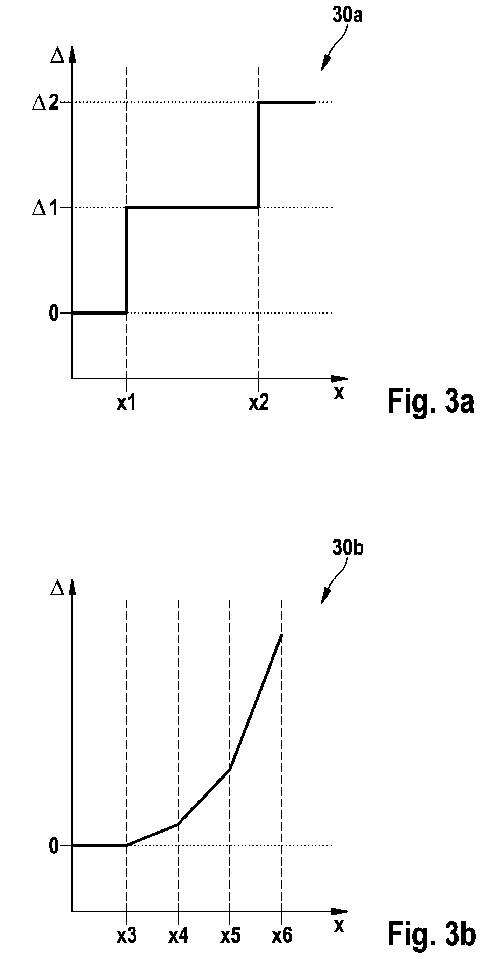

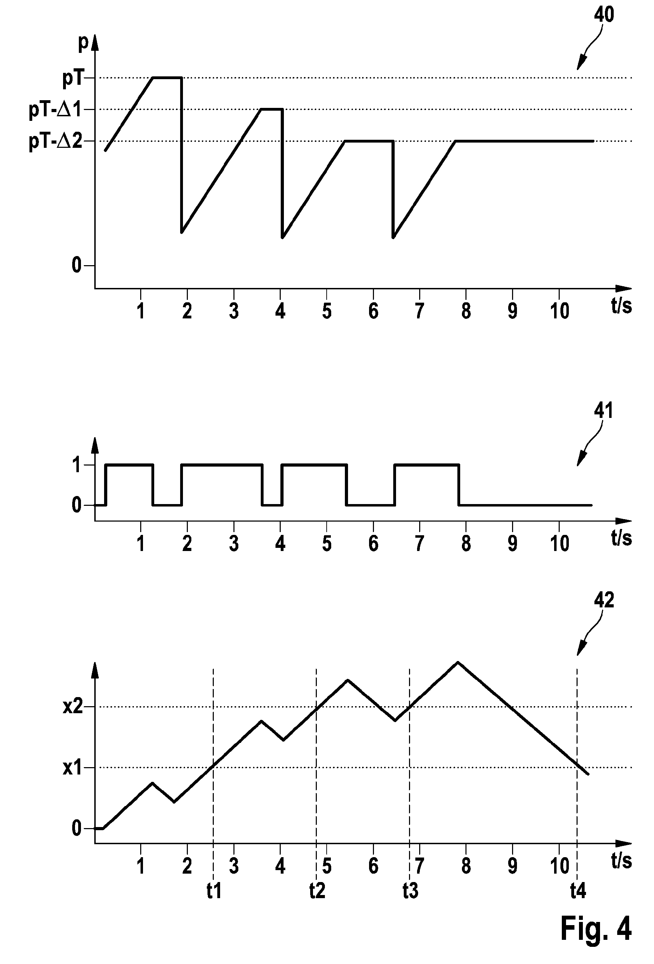

Mit Bezug auf die Fig. 3a, 3b und 4 wird im Folgenden eine beispielhafte Ausführungsform des Verfahrens in Fig. 2 genauer erläutert. In der beispielhaften Ausführungsform erfolgt ein Verändern des mindestens einen Sollwerts durch Heben oder Senken eines oberen Schwellwerts pT für den Unterdruck. Es versteht sich jedoch, dass ein Verändern des mindestens einen Sollwerts auch das Heben oder Senken eines unteren Schwellwerts für den Unterdruck umfassen kann.

Fig. 4 zeigt Diagramme des zeitlichen Verlaufs eines Differenzdrucks und einer Betriebsdauer einer elektrischen Vakuumpumpe bei einer Ansteuerung der elektrischen Vakuumpumpe. In dem ersten Diagramm 40 wird der zeitliche Verlauf des durch die elektrische Vakuumpumpe 13 erzeugten Unterdrucks bzw. des Differenzdrucks p als erfasste Regelgröße in dem Bremskraftverstärker 14 dargestellt. In dem zweiten Diagramm 41, welches in der Abszisse den gleichen zeitlichen Verlauf wie Diagramm 40 darstellt, wird das Ansteuersignal der Schalteinrichtung 12d für die elektrische Vakuumpumpe 13 gezeigt. Dabei hält ein Ansteuersignal von logisch Null die elektrische Vakuumpumpe 13 in einem inaktiven, das heißt, in einem ausgeschalteten Betriebszustand, während ein Ansteuersignal von logisch Eins die elektrische Vakuumpumpe 13 in einem aktiven, das heißt, in einem angeschalteten Betriebszustand hält. In dem dritten Diagramm 42, welches in der Abszisse den gleichen zeitlichen Verlauf wie Diagramm 40 darstellt, wird der zeitlicher Verlauf des Betriebsparameters x, insbesondere des Zählwertes des Laufzeitzählers 12b dargestellt. Der tatsächliche Wert des Betriebsparameters kann dabei ein willkürlich festgelegter Zahlenwert sein, der lediglich zu Vergleichszwecken definiert ist. Insbesondere kann der Betriebsparameter diskrete Werte in inkrementellen Abständen annehmen, beispielsweise ganze oder natürliche Zahlen. Die diskreten Werte sind in Fig. 4 aus Gründen der Übersichtlichkeit und des Verständnisses nicht gezeigt.

Fig. 4 zeigt eine beispielhafte Simulation, bei der die elektrische Vakuumpumpe 13 wiederholt an- und wieder abgeschaltet wird. Zu Beginn wird die elektrische Vakuumpumpe 13 durch die Schalteinrichtung 12d angeschaltet. Dabei steigt der Unterdruck p aufgrund der Evakuationstätigkeit der elektrischen Vakuumpumpe 13 an, während die elektrische Vakuumpumpe 13 in einem aktiven Betriebszustand ist. Wenn der Unterdruck p einen Schwellwert pT erreicht hat, kann die Schalteinrichtung 12d das Ansteuersignal in Diagramm 41 auf logisch Null setzen, um die elektrische Vakuumpumpe 13 abzuschalten. Aufgrund der nicht mehr vorhandenen Evakuationstätigkeit der elektrischen Vakuumpumpe 13 steigt der Unterdruck p nicht mehr an. Beispielsweise kann der Unterdruck p auf dem Level des oberen Schwellwerts pT konstant bleiben. Es kann auch möglich sein, dass der Unterdruck p wieder abnimmt.

Während die elektrische Vakuumpumpe 13 angeschaltet war, ist der Betriebsparameter x von dem (beispielhaften) Wert Null auf einen Wert größer als Null angestiegen. Beispielsweise kann der Betriebsparameter x durch einen Laufzeitzähler in periodischen Zeitabständen um einen vorbestimmten Betrag inkrementiert werden, solange das Ansteuersignal in Diagramm 41 den Wert logisch Eins annimmt. Dies kann zu einem Anstieg des Wertes des Betriebsparameters x mit einer konstanten Steigung führen. Sobald die Schalteinrichtung 12d die elektrische Vakuumpumpe 13 wieder abschaltet, kann der Betriebsparameter in den periodischen Zeitabständen um den vorbestimmten Betrag wieder dekrementiert werden. Dies kann zu einem Abfall des Wertes des Betriebsparameters x mit einem konstanten Gefälle führen. Auf diese Weise gibt der Betriebsparameter x die kumulierte prozentuale Betriebsdauer der elektrischen Vakuumpumpe 13 wieder.

Wenn der Unterdruck p - wie in Diagramm 40 simuliert gezeigt - unter einen unteren Schwellwert fällt, kann die Schalteinrichtung 12d dazu ausgelegt sein, die elektrische Vakuumpumpe 13 wieder in einen aktiven Betriebszustand zu versetzen. Der Wert des Betriebsparameters x kann in diesem Fall wieder inkrementiert werden. Der untere Schwellwert ist im vorliegenden Ausführungsbeispiel als über die Betriebsdauer der elektrischen Vakuumpumpe 13 als konstant dargestellt worden. Dabei ist es jedoch ebenso möglich, auch den unteren Schwellwert dynamisch variabel auszugestalten, das heißt, den unteren Schwellwert in Abhängigkeit von den im Folgenden erläuterten Parameterschwellwerten zu verändern.

Während sich die elektrische Vakuumpumpe 13 nun in einem angeschalteten Zustand befindet, kann es passieren, dass der Wert des Betriebsparameters x über einen ersten Parameterschwellwert x1 steigt, wie in Diagramm 42 zum Zeitpunkt t1 angedeutet. Die Regeleinrichtung 12c kann in diesem Fall dazu ausgelegt sein, den oberen Schwellwert pT zu verändern, beispielsweise zu senken. Die Regeleinrichtung 12c kann hierzu auf eine Kennlinie zurückgreifen, welche das Verhältnis zwischen Wert des Betriebsparameters x und Veränderung des oberen Schwellwertes pT angibt.

Beispielhafte Kennlinien sind in den Diagrammen der Fig. 3a und 3b gezeigt. In Fig. 3a ist die Kennlinie 30a eine Stufenfunktion. Wenn sich der Wert des Betriebsparameters x unterhalb des ersten Parameterschwellwertes x1 befindet, ist die Regeleinrichtung 12c dazu ausgelegt, den oberen Schwellwert pT um den Änderungsbetrag Δ=0 anzupassen, das heißt, der obere Schwellwert pT bleibt auf dem vordefinierten Wert. Wenn sich der Wert des Betriebsparameters x jedoch oberhalb des ersten Parameterschwellwertes x1, aber unterhalb eines zweiten Parameterschwellwertes x2 befindet, ist die Regeleinrichtung 12c dazu ausgelegt, den oberen Schwellwert pT um den Änderungsbetrag Δ=Δ1 anzupassen. Wenn sich schließlich der Wert des Betriebsparameters x oberhalb des zweiten Parameterschwellwertes x2 befindet, ist die Regeleinrichtung 12c dazu ausgelegt, den oberen Schwellwert pT um den Änderungsbetrag Δ=Δ2 anzupassen.

In dem beispielhaften zeitlichen Verlauf der Fig. 4 kann die Regeleinrichtung 12c beispielsweise dazu ausgelegt sein, den oberen Schwellwert pT ab dem Zeitpunkt t1 um den Betrag Δ1 zu senken. Dies ist in Diagramm 40 durch den abgesenkten Schwellwert pT-Δ1 angedeutet. Wenn nun der Unterdruck p durch die Evakuationstätigkeit der elektrischen Vakuumpumpe 13 steigt, ist die Schalteinrichtung 12d ab dem Zeitpunkt t1 dazu ausgelegt, die Regelgröße p mit dem geänderten, das heißt mit dem gesenkten oberen Schwellwert zu vergleichen. Wenn der Unterdruck p also den oberen Schwellwert pT-Δ1 erreicht, ist die Schalteinrichtung 12d dazu ausgelegt, die elektrische Vakuumpumpe 13 wieder abzuschalten.

Nach einem erneuten Unterschreiten des unteren Schwellwerts schaltet die Schalteinrichtung 12d die elektrische Vakuumpumpe erneut an. Ähnlich wie im Bezug auf den Zeitpunkt t1 erläutert, steigt der Betriebsparameter x zum Zeitpunkt t2 über den zweiten Parameterschwellwert x2, so dass die Regeleinrichtung 12c den oberen Schwellwert pT-Δ1 erneut auf pT-Δ2 senkt.

Auf diese Weise erfolgt eine dynamische Adaptierung des oberen Schwellwerts pT an die Betriebsdauer der elektrischen Vakuumpumpe 13, so dass bei hoher Beanspruchung der elektrischen Vakuumpumpe 13 die Einschaltzeiten verkürzt werden. Entsprechend kann die Regeleinrichtung 12c bei einer geringeren Belastung der elektrischen Vakuumpumpe 13, wie in Fig. 4 beispielhaft zum Zeitpunkt t4 gezeigt, den oberen Schwellwert pT wieder anheben, wenn der Betriebsparameter x unter die Parameterschwellwerte sinkt.

In Fig. 3b ist eine alternative Kennlinie 30b für die Regeleinrichtung 12c gezeigt. Die Kennlinie 30b setzt sich aus interpolierten Teilabschnitten zwischen Parameterschwellwerten x3, x4, x5 und x6 zusammen, so dass sich bei einer Änderung des Betriebsparameters x eine kontinuierliche Anpassung des oberen Schwellwertes pT ergibt. Es ist dabei klar, dass die in Fig. 3a und 3b gezeigten Kennlinien nur beispielhafter Natur sind, und dass die Anzahl der Parameterschwellwerte, die Gradienten der Kennlinien sowie die Wert der Änderungsbeträge Δ beliebige andere Werte annehmen können.

Entsprechende Kennlinien wie in Fig. 3a bzw. 3b gezeigt können auch für den unteren Schwellwert angegeben werden. Dabei können die Kennlinien für den unteren Schwellwert beispielsweise den Kennlinien für den oberen Schwellwert gleichgesetzt werden.

## Patentansprüche

1. Steuervorrichtung (12) für eine elektrische Vakuumpumpe (13), mit:
einer Bestimmungseinrichtung (12a), welche dazu ausgelegt ist, einen Betriebsparameter (x) der elektrischen Vakuumpumpe (13), der von einer Betriebsdauer oder einer Temperatur der elektrischen Vakuumpumpe (13) abhängig ist, und eine Regelgröße (p) für die elektrische Vakuumpumpe (13) zu erfassen;
einer Schalteinrichtung (12d), welche dazu ausgelegt ist, die elektrische Vakuumpumpe (13) in Abhängigkeit von einem Vergleich der Regelgröße (p) mit mindestens einem Sollwert (pT) anzuschalten oder abzuschalten; und
einer Regeleinrichtung (12c), welche dazu ausgelegt ist, den mindestens einen Sollwert (pT) der Regelgröße (p) in Abhängigkeit von dem Betriebsparameter zu verändern.

2. Steuervorrichtung (12) nach Anspruch 1, weiterhin mit:
einem Laufzeitzähler (12b), welcher dazu ausgelegt ist, den Betriebsparameter (x), der von der prozentualen Gesamtbetriebsdauer der elektrischen Vakuumpumpe (13) abhängt, zu ermitteln und der Bestimmungseinrichtung (12a) bereitzustellen.

3. Steuervorrichtung (12) nach Anspruch 2, wobei der Laufzeitzähler (12b) dazu ausgelegt ist, den Betriebsparameter (x) in gleichmäßigen Zeitabständen zu inkrementieren, während die Schalteinrichtung (12d) die elektrische Vakuumpumpe (13) in angeschaltetem Zustand hält, und den Betriebsparameter (x) in gleichmäßigen Zeitabständen zu dekrementieren, während die Schalteinrichtung (12d) die elektrische Vakuumpumpe (13) in abgeschaltetem Zustand hält.

4. Steuervorrichtung (12) nach einem der Ansprüche 1 bis 3, wobei die Regelgröße (p) ein von der elektrischen Vakuumpumpe (13) erzeugter Unterdruck ist, wobei der mindestens eine Sollwert (pT) einen oberen Schwellwert umfasst, und wobei die Schalteinrichtung (12d) dazu ausgelegt ist, die elektrische Vakuumpumpe (13) abzuschalten, wenn der Unterdruck den oberen Schwellwert überschreitet.

5. System (11), mit:
einer elektrischen Vakuumpumpe (13), welche dazu ausgelegt ist, einen Unterdruck für einen Bremskraftverstärker (14) in einem Kraftfahrzeug zu erzeugen; und
einer Steuervorrichtung (12) nach einem der Ansprüche 1 bis 4, welche dazu ausgelegt ist, die elektrische Vakuumpumpe (13) anzusteuern.

6. Verfahren (20) zum Ansteuern einer elektrischen Vakuumpumpe (13), mit den Schritten:
Erfassen eines Betriebsparameters (x) der elektrischen Vakuumpumpe (13), der von einer Betriebsdauer oder einer Temperatur der elektrischen Vakuumpumpe (13) abhängig ist;
Erfassen einer Regelgröße (p) für die elektrische Vakuumpumpe (13);
Verändern mindestens eines Sollwerts (pT) der Regelgröße (p) in Abhängigkeit von dem Betriebsparameter (x);
Vergleichen der Regelgröße (p) mit dem mindestens einen Sollwert (pT) zum Erzeugen eines Regelsignals; und
Ändern des Betriebszustands der elektrischen Vakuumpumpe (13) in Abhängigkeit von dem Regelsignal.

7. Verfahren (20) nach Anspruch 6, wobei der mindestens eine Sollwert (pT) um einen vorbestimmten Betrag (Δ) gesenkt wird, wenn der Betriebsparameter (x) einen Parameterschwellwert (x1; x2) überschreitet.

8. Verfahren (20) nach Anspruch 6, wobei der mindestens eine Sollwert (pT) kontinuierlich mit einer Zunahme des Betriebsparameters (x) gesenkt wird.

9. Verfahren (20) nach einem der Ansprüche 6 bis 8, wobei die Regelgröße (p) ein von der elektrischen Vakuumpumpe (13) erzeugter Unterdruck ist, wobei der mindestens eine Sollwert (pT) einen oberen Schwellwert umfasst, und das Ändern des Betriebszustands ein Abschalten der elektrischen Vakuumpumpe (13) umfasst, wenn der Unterdruck den oberen Schwellwert überschreitet.

10. Verfahren (20) nach einem der Ansprüche 6 bis 9, wobei das Erfassen des Betriebsparameters (x) ein Erfassen der Betriebstemperatur der elektrischen Vakuumpumpe (13) umfasst.

## Claims

1. Control device (12) for an electric vacuum pump (13), having:
a determining device (12a) which is configured to detect an operating parameter (x) of the electric vacuum pump (13) which is dependent on an operating period or a temperature of the electric vacuum pump (13), and a controlled variable (p) for the electric vacuum pump (13); a switching device (12d) which is configured to switch on or off the electric vacuum pump (13) as a function of a comparison of the controlled variable (p) with at least one setpoint value (pT); and a control device (12c) which is configured to change the at least one setpoint value (pT) of the controlled variable (p) as a function of the operating parameter.

2. Control device (12) according to Claim 1, also having:
a running time counter (12b) which is configured to determine the operating parameter (x) which depends on the percentage total operating duration of the electric vacuum pump (13) and to make it available to the determining device (12a).

3. Control device (12) according to Claim 2, wherein the running time counter (12b) is configured to increment the operating parameter (x) in uniform time intervals, while the switching device (12d) keeps the electric vacuum pump (13) in the switched-on state, and to decrement the operating parameter (x) in uniform time intervals while the switching device (12d) keeps the electric vacuum pump (13) in the switched-off state.

4. Control device (12) according to one of Claims 1 to 3, wherein the controlled variable (p) is an underpressure which is generated by the electric vacuum pump (13), wherein the at least one setpoint value (pT) comprises an upper threshold value, and wherein the switching device (12d) is configured to switch off the electric vacuum pump (13) if the underpressure exceeds the upper threshold value.

5. System (11) having
an electric vacuum pump (13) which is configured to generate an underpressure for a brake booster (14) in a motor vehicle; and a control device (12) according to one of Claims 1 to 4 which is configured to actuate the electric vacuum pump (13).

6. Method (20) for actuating an electric vacuum pump (13), having the steps:
detecting an operating parameter (x) of the electric vacuum pump (13) which is dependent on the operating duration or a temperature of the electric vacuum pump (13) ;
detecting a controlled variable (p) for the electric vacuum pump (13);
changing at least one setpoint value (pT) of the controlled variable (p) as a function of the operating parameter (x);
comparing the controlled variable (p) with the at least one setpoint value (pT) in order to generate a control signal and
changing the operating state of the electric vacuum pump (13) as a function of the control signal.

7. Method (20) according to Claim 6, wherein the at least one setpoint value (pT) is lowered by a predetermined absolute value (Δ) if the operating parameter (x) exceeds a parameter threshold value (x1; x2).

8. Method (20) according to Claim 6, wherein at least one setpoint value (pT) is lowered continuously when there is an increase in the operating parameter (x).

9. Method (20) according to one of Claims 6 to 8, wherein the controlled variable (p) is an underpressure which is generated by the electric vacuum pump (13), wherein the at least one setpoint value (pT) comprises an upper threshold value, and the changing of the operating state comprises switching off the electric vacuum pump (13) if the underpressure exceeds the upper threshold value.

10. Method (20) according to one of Claims 6 to 9, wherein the detection of the operating parameter (x) comprises detecting the operating temperature of the electric vacuum pump (13).

## Revendications

1. Ensemble de commande (12) pour une pompe électrique (13) à vide, l'ensemble présentant :
un dispositif de détermination (12a) conçu pour détecter un paramètre de fonctionnement (x) de la pompe électrique (13) à vide qui dépend de la durée de fonctionnement ou de la température de la pompe électrique (13) à vide et une grandeur de régulation (p) de la pompe électrique (13) à vide,
un circuit (12d) conçu pour brancher ou débrancher la pompe électrique (13) à vide en fonction d'une comparaison entre la grandeur de régulation (p) et au moins une valeur de consigne (pT) et
un dispositif de régulation (12c) conçu pour modifier au moins une valeur de consigne (pT) de la grandeur de régulation (p) en fonction du paramètre de fonctionnement.

2. Ensemble de commande (12) selon la revendication 1, et présentant en outre un compteur (12b) de durée de fonctionnement conçu pour déterminer le paramètre de fonctionnement (x), qui dépend du pourcentage de la durée totale de fonctionnement de la pompe électrique (13) à vide, et pour le délivrer au dispositif de détermination (12a).

3. Ensemble de commande (12) selon la revendication 2, dans lequel le compteur (12b) de durée de fonctionnement est conçu pour augmenter le paramètre de fonctionnement (x) à des intervalles réguliers pendant que le circuit (12d) maintient la pompe électrique (13) à vide à l'état branché et pour diminuer le paramètre de fonctionnement (x) à des intervalles de temps réguliers pendant que le circuit (12d) maintient la pompe électrique (13) à vide à l'état débranché.

4. Ensemble de commande (12) selon les revendications 1 à 3, dans lequel la grandeur de régulation (p) est une dépression formée par la pompe électrique (13) à vide, la ou les valeurs de consigne (pT) comportant une valeur de seuil supérieure et le circuit (12d) étant conçu pour débrancher la pompe électrique (13) à vide lorsque la dépression dépasse la valeur de seuil supérieure.

5. Système (11) comprenant :
une pompe électrique (13) à vide conçue pour former une dépression pour un amplificateur (14) de force de freinage d'un véhicule automobile et
un dispositif de commande (12) selon l'une des revendications 1 à 4 conçu pour commander la pompe électrique (13) à vide.

6. Procédé (20) de commande d'une pompe électrique (13) à vide, le procédé comportant les étapes qui consistent à :
saisir un paramètre de fonctionnement (x) de la pompe électrique (13) à vide qui dépend de la durée de fonctionnement ou de la température de la pompe électrique (13) à vide,
saisir une grandeur de régulation (p) de la pompe électrique (13) à vide,
modifier au moins une valeur de consigne (pT) de la grandeur de régulation (p) en fonction du paramètre de fonctionnement (x),
comparer la grandeur de régulation (p) à la ou les valeurs de consigne (pT) pour former un signal de régulation et
modifier l'état de fonctionnement de la pompe électrique (13) à vide en fonction du signal de régulation.

7. Procédé (20) selon la revendication 6, dans lequel la ou les valeurs de consigne (pT) sont diminuées d'une valeur prédéterminée (Δ) si le paramètre de fonctionnement (x) dépasse une valeur de seuil (x1; x2) du paramètre.

8. Procédé (20) selon la revendication 6, dans lequel la ou les valeurs de consigne (pT) sont diminuées de manière continue lorsque le paramètre de fonctionnement (x) augmente.

9. Procédé (20) selon l'une des revendications 6 à 8, dans lequel la grandeur de régulation (p) est la dépression formée par la pompe électrique (13) à vide, la valeur de consigne (pT) comportant une valeur de seuil supérieure et la modification de l'état de fonctionnement comprenant un débranchement de la pompe électrique (13) à vide si la dépression dépasse une valeur de seuil supérieure.

10. Procédé (20) selon l'une des revendications 6 à 9, dans lequel la détection du paramètre de fonctionnement (x) comporte la détection de la température de fonctionnement de la pompe électrique (13) à vide.
